# EUROPEAN PATENT SPECIFICATION

(11) **EP 2 267 336 B1**
(45) Date of publication and mention of the grant of the patent: **07.08.2013**
(21) Application number: 10006375.9
(22) Date of filing: 18.06.2010
(51) Int. Cl.: F16H 55/06, F16H 55/22

(54) **Worm gear hub**
Schneckenradnabe
Moyeu à vis sans fin

(30) Priority: 19.06.2009 US 218801 P
(43) Date of publication of application: 29.12.2010
(73) Proprietor: GM Global Technology Operations LLC, Detroit, MI 48265-3000 (US); Steering Solutions IP Holding Corporation, Saginaw, MI 48601 (US)
(72) Inventor: Beyerlein, Jeff E., Birch Run, MI 48415 (US); Turek, Alan G., Mayville, MI 48744 (US); Anders, William S., Merrill, MI 48637 (US); Heather, Jesse A., Swartz Creek, MI 48473 (US)
(74) Representative: Manitz, Finsterwald & Partner GbR

(56) References cited:
- EP-A1- 1 950 122
- JP-A- 11 301 501
- JP-A- 2001 206 230
- US-A- 6 016 649

## Description

### FIELD OF THE INVENTION

The subject invention relates to a worm gear hub and more particularly a worm gear hub assembly suitable for use in electric power steering units and systems.

### BACKGROUND

In an Electric Power Steering (EPS) unit an electric motor drives a worm shaft and worm gear to provide assist torque to the turning of a steering shaft. This reduces the effort required to steer a vehicle. Currently worm gears used in these systems have been made using a solid steel puck. Each puck is then machined with a knurl on the perimeter. The puck then is the base or hub of the worm gear assembly.

The knurled surface is bead blasted to prep for a silane solution treatment that prepares the metal for bonding. A ring of plastic, made by a spin cast method, is placed on the metal. After the plastic is pressed on, the worm gear assembly is heated to cause the plastic to melt into the knurl surface of the hub and bond to the steel. This is followed by an annealing cycle to stress relieve the plastic. The hub assembly is pressed onto a shaft and teeth are hobbed (or cut) into the plastic ring to complete the gear assembly. As use in an electric power steering application or other application, the knurl to plastic bond transfers assist torque from the worm shaft, through the worm gear assembly, to the steering shaft. The process of making one gear hub assembly can be found in US Patent No. 6,638,390.

Machining of gear hubs to create the knurled surface with which to bond the plastic is expensive, as are powdered metal hubs.

Accordingly, it is desirable to provide a worm gear hub and worm gear hub assembly capable of transferring torque between a worm shaft and a steering shaft without the prior disadvantages.

JP 2001206230 A dislcoses a gear blank according to the preamble of claim 1, an electric power steering system according to the preamble of claim 4, and a method of making a worm gear according to the preamble of claim 7.

It is an object of the present invention to provide an improved gear blank, an improved electric power steering system and an improved method of making a worm gear.

### SUMMARY OF THE INVENTION

The object is satisfied by a gear blank according to the features of claim 1, an electric power steering system according to the features of claim 4, and a method of making a worm gear according to the features of claim 7. Preferred embodiments of the invention are mentioned in the dependent claims.

In accordance with the present invention, gear blank is provided. It comprises a metal hub blank having an outer perimeter. A plurality of individual adjacent tabs extends radially from the outer perimeter of the metal hub blank, forming an outer circumferential edge that has a first diameter. A polymeric ring overlaying a portion of the metal hub blank, including the tabs is provided. The polymeric ring has an outer diameter, the outer diameter generally greater than the first diameter.

In accordance with the present invention, electric power steering system is provided. The electric power steering system comprises a steering shaft connected to handwheel at one end and a rack and pinion steering mechanism at an opposite end. A steering assist unit comprising an electric motor operated by a controller and driving a worm is provided. A worm gear is interposed between the worm and the steering shaft, the worm having worm teeth and the worm gear is fitted on the steering shaft. The worm gear further comprises a metal hub blank having an outer perimeter, a plurality of individual adjacent tabs extending from the outer perimeter of the metal hub blank forming an outer circumferential edge that has a first diameter. A polymeric ring overlaying a portion of the metal hub blank, including the tabs is provided. The polymeric ring has an outer diameter and gear teeth on an outer edge surface of the polymeric ring for meshing with the worm teeth.

In accordance with the present invention, a method of making a worm gear is also provided. The method comprises cold forming a metal hub blank having tabs about a perimeter of the blank. Thereafter a polymeric material is injection molded around the tabs to form a polymeric ring. The metal hub blank with the polymeric ring is pressed on a shaft and gear teeth are cut onto an outer surface of the polymeric ring with a hobbing process.

The above features and advantages and other features and advantages of the present invention are readily apparent from the following detailed description of the invention when taken in connection with the accompanying drawings.

### BRIEF DESCRIPTION OF THE DRAWINGS

Other objects, features, advantages and details appear, by way of example only, in the following detailed description of embodiments, the detailed description referring to the drawings in which:

FIG. 1 is a schematic diagram of a power steering system in accordance with the invention;

FIG. 2 is an elevation view of a gear hub blank in accordance with the invention;

FIG. 3 is a cross-sectional view of the gear hub blank of FIG. 2, taken along line 3-3 of FIG. 2;

FIG. 4. is a pictorial view showing another aspect of the invention;

FIG. 5 is a pictorial view, partially in cross-section, taken generally along line 5-5 of FIG. 4;

FIG. 6 is a pictorial view of a finished worm gear in accordance with one aspect of the invention;

FIG. 7 is an elevation view, partially in cross-section showing another aspect of the invention; and

FIG. 8 is a detail view taken from area 8-8 of FIG. 3.

### DESCRIPTION OF THE EMBODIMENTS

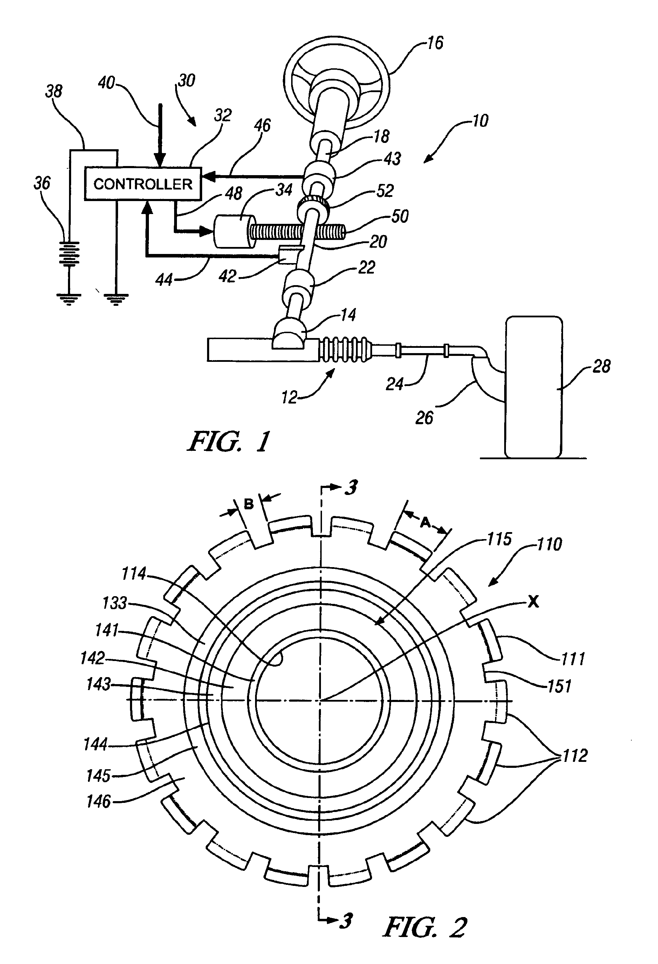

Referring now to the Figures, where the invention will be described with reference to specific embodiments without limiting same, and in accordance with exemplary embodiments of the present invention, FIG. 1 shows an electric power steering (EPS) system 10 for a motor vehicle. The EPS system 10 includes a rack-and-pinion type steering mechanism 12 that is comprised of a toothed rack (not shown) and a pinion gear (not shown) located under a gear housing 14. A steering wheel 16 is coupled to an upper steering shaft 18. As the steering wheel 16 is turned, the upper steering shaft 18, which is connected to a lower steering shaft 20 through a universal joint 22, turns the pinion gear. Rotation of the pinion gear moves the toothed rack, which moves tie rods 24 (only one shown) that, in turn, move steering knuckles 26 (only one shown), which turn wheels 28 (only one shown).

EPS assist torque is provided through a steering assist unit 30, which includes a controller 32 and an electric motor 34. The controller 32 is powered by a vehicle power supply 36 through a supply line 38. The controller 32 receives a signal indicative of the vehicle velocity on a signal line 40. Steering pinion gear angle is measured by a position sensor 42 and fed to the controller 32 through a line 44. As the steering wheel 16 is turned, a torque sensor 43 senses the torque applied to the steering wheel 16 by a vehicle operator. The torque sensor 43 may include a torsion bar (not shown) and a variable-resistance type of sensor (not shown) that outputs a variable resistance signal to the controller 32 through a line 46 in relation to the amount of twist on the torsion bar.

In response to the inputs on lines 40, 44 and 46, the controller 32 sends a command signal through a line 48 to the electric motor 34. The motor 34, in turn, supplies an assist torque to the steering system 10 through a worm 50 and a worm gear 52, in order to provide a steering torque assist to the steering system 10 that supplements the steering force exerted by a vehicle operator.

FIGS. 2, 3 and 8 show a gear hub blank 110. As shown, the gear hub blank 110 includes an outer circumferential edge 111, having a diameter defmed by a plurality of bent tabs (or tangs) 112, extending radially outward from a center axis "X". Gear hub blank 110 also includes an inner circumferential edge 114. A body portion 115 of hub 110 extends between outer circumferential edge 111 and inner circumferential edge 114.

As best seen in FIGS. 2, 3 and 5, an opposite inner face 132 and an opposite outer face 133 of gear hub blank 110 are generally non-symmetrical on body portion 115, which comprises a series of concentric ring corrugations 141, 142, 143, 144, 145 and 146 falling into a plurality of planes, and arranged about center axis "X". Among other advantages, concentric ring corrugations 141-146 provide added rigidity to gear hub blank 110. It will be appreciated by a person of skill in the art that the number, size and radial width of corrugations may vary depending on design torque forces and/or the gear hub blank material.

In an exemplary embodiment, gear hub blank 110 is a cold formed metal incorporating opposing bent tabs 112 extending from an outer perimeter 151 of gear hub blank 110, and in a further embodiment is made from SAE grade 1015 steel. Outer perimeter 151 also has a diameter, the outer perimeter 151 diameter being less than the diameter of outer circumferential edge 111. The gear hub blank 110 can be formed from metal utilizing a variety of stamping, spin forming, flow forming and machining techniques as required for producing the desired geometry.

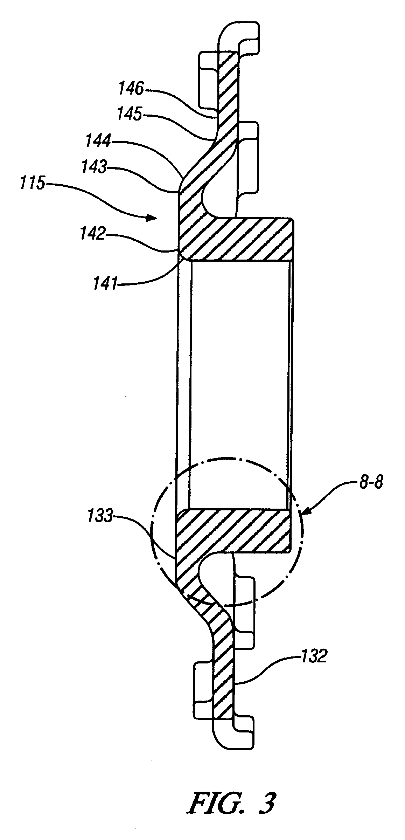

Referring again to FIGS. 2 and 3, bent tabs 112 of gear hub blank 110 are shown in detail. In the exemplary embodiment shown in FIG. 2, there are eighteen separate bent tabs 112 extending from outer perimeter 151 and ending at outer circumferential edge 111 of gear hub blank 110.

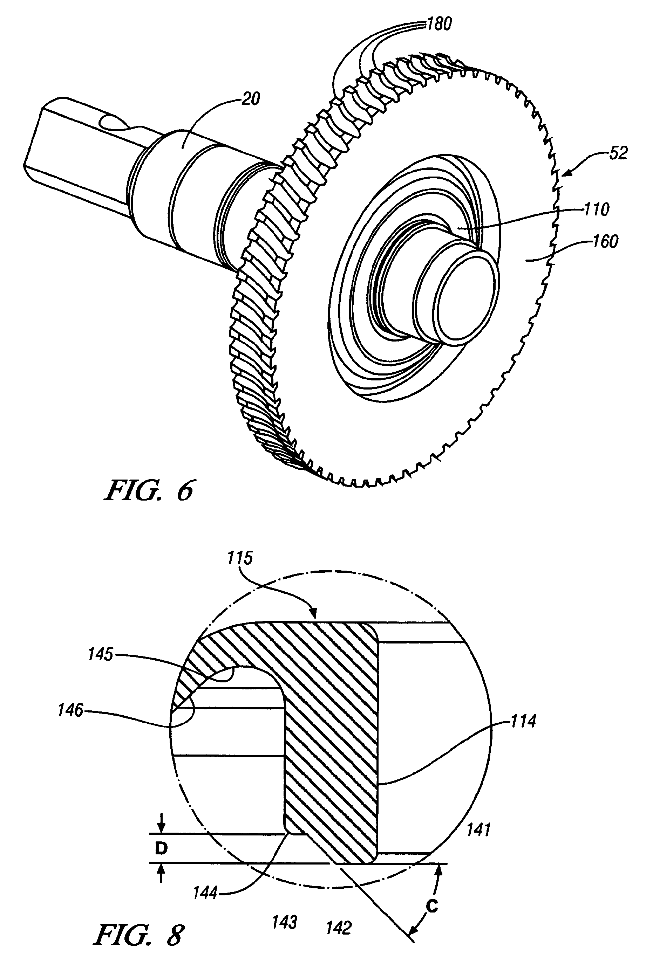

In the non-limiting embodiment shown, each bent tab 112 spans an arc "A" that in the embodiment shown is an 18 degree arc. The spacing between adjacent bent tabs 112, identified as "B" has a 2 degree arc. It will be appreciated that other numbers of bent tabs 112 may be used on gear hub blank 110. Further, it will be appreciated that the span of arc "A" may be non-uniform or may vary between adjacent bent tabs 112, as may the spacing between adjacent bent tabs 112, identified as "B", depending on size and torque requirements for gear hub blank 110. Further, as specifically seen in FIG. 8, the geometry of gear hub blank 110 includes an angle "C" of about 45 degrees at the inner circumferential edge 114 and extending radially outwardly. This angle extends about half of the thickness "D" of inner circumferential edge, and in an exemplary embodiment is about 1.5 millimeters. This geometry facilitates pressing the gear hub blank 110 onto a shaft, as will be described herein.

As shown, bent tabs 112 are generally orthogonal to inner face 132 and outer face 133 of gear hub blank 110 and extend axially from face133. Adjacent bent tabs 112 extend in opposing axial directions, such that they are about 180 degrees opposed. Of course, depending on torque requirements, other configurations for bent tabs 112 may be contemplated, including a configuration in which bent tabs simultaneously extend radially from the center "X" of hub blank 110 and also extend at an acute angle from inner face 132 and outer face 133. For example, it will be appreciated that bent tabs 112 may extend from each of faces 132 and 133 at an angle from about 45 degrees to about 90 degrees - with the example angle of 90 degrees shown.

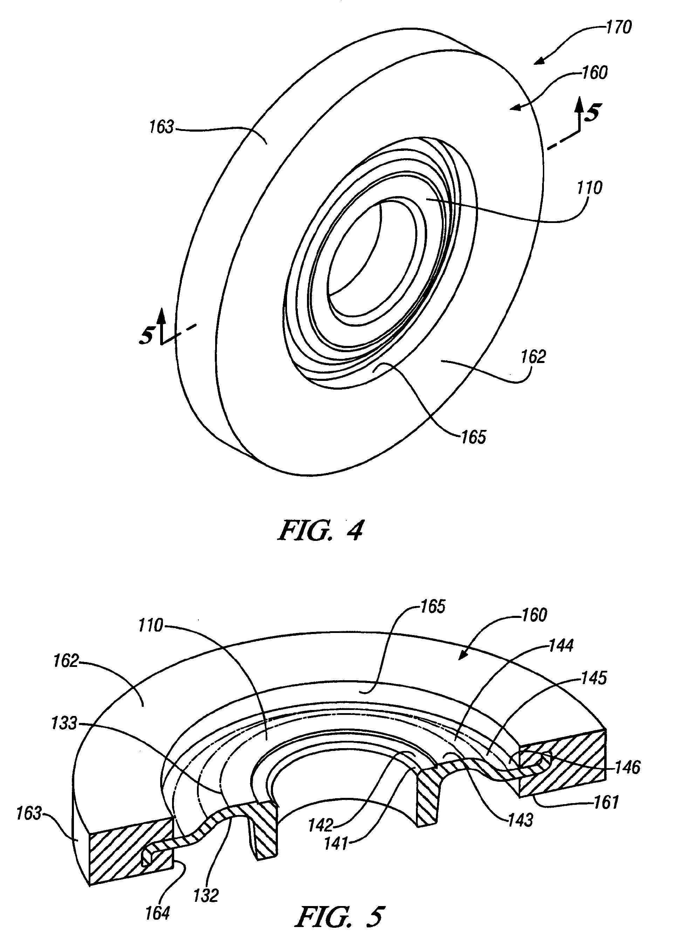

Referring now to FIGS. 4 and 5, a polymeric ring 160 is placed on gear hub blank 110 to form a gear blank 170. The polymeric ring 160 includes an inner ring face 161, outer ring face 162, an outer edge surface 163 and partial edge surfaces 164 and 165. As seen partial edge surface 164 extends generally orthogonally from opposite inner face 132 of gear hub blank 110, while partial edge surface 165 extends generally orthogonally from opposite outer face 133 of gear hub blank 110. Outer edge surface 163 has an outer diameter greater than the diameter of outer circumferential edge 111, while partial edge surfaces 164 and 165 have an inner diameter less than the diameter of outer perimeter 151. The bent tabs 112 of gear hub blank 110 are covered by the polymeric ring 160, and encased therein. In an exemplary embodiment, polymeric ring 160 is injection molded onto gear hub blank 110, made possible by the bent tabs 112. The polymeric ring 160 is injection molded in a generally rectangular cross-section, as seen in FIG. 5, forming a generally toroid shape, completing the gear blank 170 as seen in FIG. 4.

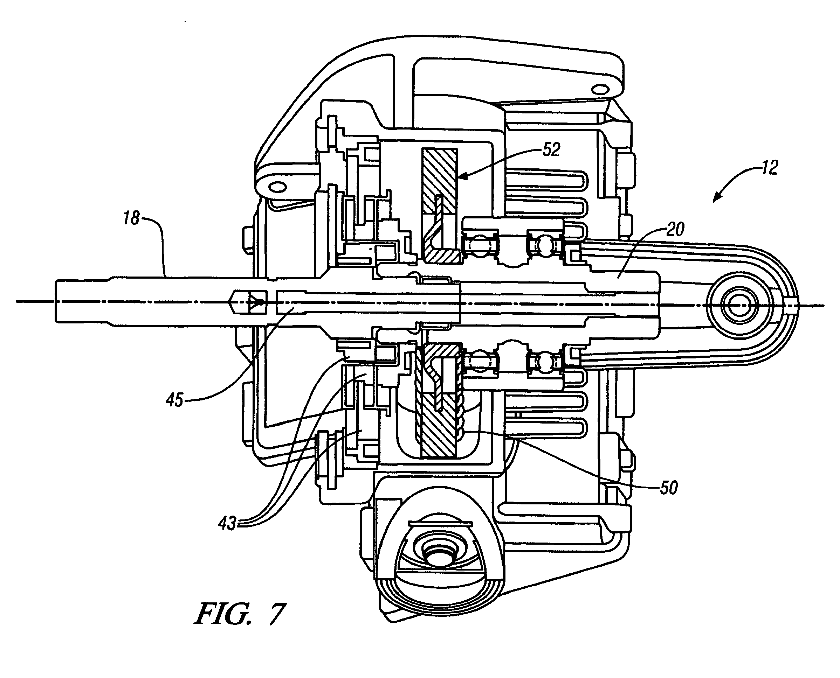

Thereafter, gear blank 170 is pressed or welded onto a shaft, and in the example shown, lower steering shaft20. The pressing step is followed by a hobbing process that cuts multiple individual gear teeth 180 into the outer edge surface 163 of polymeric ring 160 of gear blank 170. The result is the worm gear 52, shown in FIG. 6 placed within the steering mechanism 12 of FIG. 7. As illustrated, FIG. 7 shows lower steering shaft 20 and torque sensor 43 connected to torsion bar 45. Worm gear 52, shown in cross-section, is pressed on lower steering shaft 20 and driven by the worm 50 which is in turn driven by electric motor 34 (shown in FIG. 1).

Bent tabs 112 of gear hub blank 110 provide both axial and radial retention of the polymeric material comprising polymeric ring 160 over gear hub blank 110. In addition, the thickness of the base stock from gear hub blank 110 in bent tabs 112 provides the ability to transfer torque from one shaft to another, once gear teeth 180 have been cut in the gear blank 170. In the non-limiting embodiment shown, the bent tabs 112 of worm gear 52 carry torsional stiffness between lower shaft 20 and worm 50, allowing EPS system 10 to reliably perform at a significant cost reduction.

## Claims

1. A gear blank comprising:
a metal hub blank (110) having an outer perimeter (151);
a plurality of individual adjacent tabs (112) extending radially from said outer perimeter (151) of said metal hub blank (110) and forming an outer circumferential edge (111) of said metal hub blank (110) and having a first diameter; and
a polymeric ring (160) overlaying a portion of said metal hub blank (110) including said tabs (112), said polymeric ring (160) having an outer diameter, said outer diameter being generally greater than said first diameter;
**characterized in that**
adjacent tabs (112) extend at an angle to a face (132, 133) of said metal hub blank (110) in opposing directions.

2. The gear blank of claim 1, wherein adjacent tabs (112) extend at an angle of between about 45 degrees to about 90 degrees from the face (132, 133) of said metal hub blank (110).

3. The gear blank of claim 2, wherein adjacent tabs (112) extend at an angle of about 90 degrees from a face (132, 133) of said metal hub blank (110).

4. An electric power steering system comprising:
a steering shaft (18, 20) connected to a handwheel (16) at one end and a rack and pinion steering mechanism (12) at an opposite end;
a steering assist unit (30) comprising an electric motor (34) operated by a controller (32) and driving a worm (50) and a worm gear (52) interposed between said worm (50) and said steering shaft (18, 20),
said worm (50) having worm teeth and said worm gear (52) fitted on said steering shaft (18, 20);
said worm gear (52) further comprising a metal hub blank (110) having an outer perimeter (151), a plurality of individual adjacent tabs (112) extending from said outer perimeter (151) of said metal hub blank (110), and forming an outer circumferential edge (111) of said metal hub blank (110) and having a first diameter, a polymeric ring (160) overlaying a portion of said metal hub blank (110) including said tabs (112), said polymeric ring (160) having a second diameter; and
gear teeth (180) on an outer edge surface (163) of said polymeric ring (160) for meshing with said worm teeth;
**characterized in that**
adjacent tabs (112) of said plurality of tabs (112) extend at an angle to a face (132, 133) of said metal hub blank (110) in opposing directions.

5. The electric power steering system of claim 4, wherein adjacent tabs (112) extend at an angle of between about 45 degrees to about 90 degrees from a face (132, 133) of said metal hub blank (110).

6. The electric power steering system of claim 5, wherein adjacent tabs (112) extend at an angle of about 90 degrees from a face (132, 133) of said metal hub blank (110).

7. A method of making a worm gear (52) comprising:
cold forming a metal hub blank (110) having a plurality of individual adjacent tabs (112) about a perimeter (151) of said blank (110);
injection molding a polymeric material around said tabs (112) to form a polymeric ring (160);
pressing said metal hub blank (110) on a shaft (18, 20); and
hobbing gear teeth (180) onto an outer surface (163) of said polymeric ring (160),
**characterized in that**
the method comprises bending adjacent tabs (112) of said blank (110) at an angle to a face (132, 133) of said blank (110) in opposing directions.

## Patentansprüche

1. Zahnradkörper, der umfasst:
einen Metallnabenkörper (110) mit einem Außenumfang (151);
mehrere einzelne benachbarte Ansätze (112), die sich von dem Außenumfang (151) des Metallnabenkörpers (110) radial erstrecken und einen äußeren Umfangsrand (111) des Metallnabenkörpers (110) bilden sowie einen ersten Durchmesser aufweisen; und
einen Polymerring (160), der einen Abschnitt des Metallnabenkörpers (110) einschließlich der Ansätze (112) überlagert, wobei der Polymerring (160) einen äußeren Durchmesser aufweist, wobei der äußere Durchmesser generell größer als der erste Durchmesser ist;
**dadurch gekennzeichnet, dass**
sich benachbarte Ansätze (112) unter einem Winkel bezüglich einer Fläche (132, 133) des Metallnabenkörpers (110) in entgegengesetzte Richtungen erstrecken.

2. Zahnradkörper nach Anspruch 1,
wobei sich benachbarte Ansätze (112) unter einem Winkel zwischen ungefähr 45 Grad bis ungefähr 90 Grad von der Fläche (132, 133) des Metallnabenkörpers (110) erstrecken.

3. Zahnradkörper nach Anspruch 2,
wobei sich benachbarte Ansätze (112) unter einem Winkel von ungefähr 90 Grad von einer Fläche (132, 133) des Metallnabenkörpers (110) erstrecken.

4. Elektrisches Servolenkungssystem, das umfasst:
eine Lenkwelle (18, 20), die an einem Ende mit einen Handrad (16) sowie an einem entgegengesetzten Ende mit einem Zahnstangen- und Ritzel-Lenkmechanismus (12) verbunden ist;
eine Lenkunterstützungseinheit (30), die einen Elektromotor (34) umfasst, der durch einen Controller (32) betrieben wird und eine Schnecke (50) sowie ein Schneckenrad (52) antreibt, das zwischen die Schnecke (50) und die Lenkwelle (18, 20) dazwischen gesetzt ist, wobei die Schnecke (50) Schneckenzähne aufweist und das Schneckenrad (52) auf der Lenkwelle (18, 20) eingepasst ist;
wobei das Schneckenrad (52) ferner einen Metallnabenkörper (110) mit einem Außenumfang (151), mehrere einzelne benachbarte Ansätze (112), die sich von dem Außenumfang (151) des Metallnabenkörpers (110) erstrecken und einen äußeren Umfangsrand (111) des Metallnabenkörpers (110) bilden sowie einen ersten Durchmesser aufweisen, und einen Polymerring (160) umfasst, der einen Abschnitt des Metallnabenkörpers (110) einschließlich der Ansätze (112) überlagert, wobei der Polymerring (160) einen zweiten Durchmesser aufweist; und
Zahnradzähne (180) an einer äußeren Randfläche (163) des Polymerrings (160), um mit den Schneckenzähnen zu kämmen;
**dadurch gekennzeichnet, dass**
sich benachbarte Ansätze (112) von den mehreren Ansätzen (112) unter einem Winkel bezüglich einer Fläche (132, 133) des Metallnabenkörpers (110) in entgegengesetzte Richtungen erstrecken.

5. Elektrisches Servolenkungssystem nach Anspruch 4,
wobei sich benachbarte Ansätze (112) unter einem Winkel zwischen ungefähr 45 Grad bis ungefähr 90 Grad von einer Fläche (132, 133) des Metallnabenkörpers (110) erstrecken.

6. Elektrisches Servolenkungssystem nach Anspruch 5,
wobei sich benachbarte Ansätze (112) unter einem Winkel von ungefähr 90 Grad von einer Fläche (132, 133) des Metallnabenkörpers (110) erstrecken.

7. Verfahren zum Herstellen eines Schneckenrads (52), umfassend:
Kaltformen eines Metallnabenkörpers (110), der mehrere einzelne benachbarte Ansätze (112) um einen Umfang (151) des Körpers (110) herum aufweist;
Spritzgießen eines Polymermaterials um die Ansätze (112) herum, um einen Polymerring (160) zu bilden;
Pressen des Metallnabenkörpers (110) auf eine Welle (18, 20); und
Walzfräsen von Zahnradzähnen (180) auf einer Außenfläche (163) des Polymerrings (160),
**dadurch gekennzeichnet, dass**
das Verfahren das Biegen benachbarter Ansätze (112) des Körpers (110) unter einem Winkel bezüglich einer Fläche (132, 133) des Körpers (110) in entgegengesetzte Richtungen umfasst.

## Revendications

1. Ébauche d'engrenage comprenant :
une ébauche de moyeu en métal (110) ayant un périmètre extérieur (151) ;
une pluralité de plots adjacents individuels (112) s'étendant radialement depuis ledit périmètre extérieur (151) de ladite ébauche de moyeu en métal (110) et formant une bordure circonférentielle extérieure (111) de ladite ébauche de moyeu en métal (110) et ayant un premier diamètre ; et
une bague en polymère (160) recouvrant une portion de ladite ébauche de moyeu en métal (110) incluant lesdits plots (112), ladite bague en polymère (160) ayant un diamètre extérieur, ledit diamètre extérieur étant généralement plus grand que ledit premier diamètre ;
**caractérisé en ce que**
des plots adjacents (112) s'étendent sous un angle vers une face (132, 133) de ladite ébauche de moyeu en métal (110) dans des directions opposées.

2. Ébauche d'engrenage selon la revendication 1, dans laquelle des plots adjacents (112) s'étendent sous un angle entre environ 45° et environ 90° depuis la face (132, 133) de ladite ébauche de moyeu en métal (110).

3. Ébauche d'engrenage selon la revendication 2, dans laquelle des plots adjacents (112) s'étendent sous un angle d'environ 90° depuis une face (132, 133) de ladite ébauche de moyeu en métal (110).

4. Système de direction assistée électrique comprenant :
un arbre de direction (18, 20) connecté à un volant (16) à une extrémité et à un mécanisme de direction à pignon-et-crémaillère (12) à une extrémité opposée ; une unité d'assistance de direction (30) comprenant un moteur électrique (34) commandé par un contrôleur (32) et entraînant une vis sans fin (50), et un roue tangente (52) interposée entre ladite vis sans fin (50) et ledit arbre de direction (18, 20), ladite vis sans fin (50) ayant des dents de vis sans fin et ladite roue tangente (52) étant calée sur ledit arbre de direction (18, 20) ;
ladite roue tangente (52) comprenant en outre une ébauche de moyeu en métal (110) ayant un périmètre extérieur (151), une pluralité de plots adjacents individuels (112) s'étendant depuis ledit périmètre extérieur (151) de ladite ébauche de moyeu en métal (110), et formant une bordure circonférentielle extérieure (111) de ladite ébauche de moyeu en métal (110) et ayant un premier diamètre, une bague en polymère (160) recouvrant une portion de ladite ébauche de moyeu en métal (110) incluant lesdits plots (112), ladite bague en polymère (160) ayant un second diamètre ; et
des dents de roue tangente (180) sur une surface de bordure extérieure (163) de ladite bague en polymère (160) pour engrener avec lesdites dents de vis sans fin ;
**caractérisé en ce que**
des plots adjacents (112) de ladite pluralité de plots (112) s'étendent sous un angle vers une face (132, 133) de ladite ébauche de moyeu en métal (110) dans des directions opposées.

5. Système de direction assistée électrique selon la revendication 4, dans lequel des plots adjacents (112) s'étendent sous un angle entre environ 45° et environ 90° depuis une face (132, 133) de ladite ébauche de moyeu en métal (110).

6. Système de direction assistée électrique selon la revendication 5, dans lequel des plots adjacents (112) s'étendent sous un angle d'environ 90° depuis une face (132, 133) de ladite ébauche de moyeu en métal (110).

7. Procédé pour réaliser une vis tangente (52) comprenant les étapes consistant à :
former à froid une ébauche de moyeu en métal (110) ayant une pluralité de plots adjacents individuels (112) autour d'un périmètre (151) de ladite ébauche (110) ;
mouler par injection un matériau polymère autour desdits plots (112) pour former une bague en polymère (160) ;
presser ladite ébauche de moyeu en métal (110) sur un arbre (18, 20) ;
et
fraiser des dents de roue tangente (180) sur une surface extérieure (163) de ladite bague en polymère (160),
**caractérisé en ce que**
le procédé comprend les étapes consistant à courber des plots adjacents (112) de ladite ébauche (110) sous un angle vers une face (132, 133) de ladite ébauche (110) dans des directions opposées.
